# EUROPEAN PATENT APPLICATION

(11) **EP 4 543 139 A1**
(43) Date of publication of application: **23.04.2025**
(21) Application number: 23822855.5
(22) Date of filing: 15.05.2023
(51) Int. Cl.: H04W 88/08

(54) **COMMUNICATION APPARATUS AND DEVICE**

(30) Priority: 14.06.2022 CN 202210668276
(71) Applicant: ZTE Corporation, Shenzhen, Guangdong 518057 (CN)
(72) Inventor: YANG, Jun, Shenzhen, Guangdong 518057 (CN); CHEN, Yijian, Shenzhen, Guangdong 518057 (CN); DOU, Jianwu, Shenzhen, Guangdong 518057 (CN); DAI, Bo, Shenzhen, Guangdong 518057 (CN); LIU, Kun, Shenzhen, Guangdong 518057 (CN)
(74) Representative: WBH Wachenhausen Patentanwälte PartG mbB
(86) International application number: PCT/CN2023/094338
(87) International publication number: WO 2023/241285

(57) **Abstract**

Embodiments of the present application provide a communication apparatus and a device comprising the communication apparatus. The communication apparatus comprises a phase modulation circuit, a charging circuit, and an antenna; the phase modulation circuit is configured to perform phase adjustment on an electromagnetic signal; the charging circuit is configured to convert the electromagnetic signal into electric energy; the antenna is configured to receive the electromagnetic signal; the antenna is connected to the phase modulation circuit, and the electromagnetic signal is transmitted to the phase modulation circuit by means of the antenna; and the antenna is connected to the charging circuit, and the electromagnetic signal is transmitted to the charging circuit by means of the antenna.

## Description

### TECHNICAL FIELD

Embodiments of the present disclosure relate to the technical field of communications, and particularly to a communication apparatus and device.

### BACKGROUND

With the development of wireless communication technology, the network scale is gradually expanding. The expansion of network scale requires investment in more communication devices. Communication devices, such as base stations, user equipment, smart cars, and smart homes, need to be powered in order to operate properly.

In the relevant technologies, wired power supply is used to power communication devices, but wired power supply requires planning and deployment of power lines, which is limited by geographical environment, and increases costs. Wireless charging technology has also emerged as an option, but the current solutions typically use magnetic resonance or inductive charging, which are mainly applicable for short-range charging scenarios. How to optimize the power supply for communication devices is an urgent problem to be discussed and solved.

### SUMMARY

Embodiments of the present disclosure provide a communication apparatus and device, aiming to realize long-distance power supply and charging for communication devices.

In accordance with a first aspect of the present disclosure, an embodiment provides a communication apparatus, including: a phase adjustment circuit, a charging circuit, and antennas, where the phase adjustment circuit is configured to adjust phases of electromagnetic signals; the charging circuit is configured to convert the electromagnetic signals into electrical energy; the antennas are configured to receive the electromagnetic signals; the antennas are connected to the phase adjustment circuit, and the electromagnetic signals are transmitted to the phase adjustment circuit through the antennas; and the antennas are connected to the charging circuit, and the electromagnetic signals are transmitted to the charging circuit through the antennas.

In accordance with a second aspect of the present disclosure, an embodiment provides a communication apparatus, including: an antenna module, a signal processing module, and an energy receiving module, where the antenna module includes an antenna management unit and an antenna array; the antenna array is configured to receive electromagnetic signals; the antenna management unit is configured to control operation modes of the antenna array or manage allocation of antenna array resources; the signal processing module includes a phase adjustment unit and a signal processing unit; the phase adjustment unit includes a phase adjustment circuit configured to adjust phases of the electromagnetic signals; the signal processing unit is configured to process the electromagnetic signals to obtain information carried by the electromagnetic signals; the energy receiving module includes an energy conversion unit and an energy management unit; the energy conversion unit includes an energy charging circuit configured to convert the electromagnetic signals into electrical energy; and the energy management unit is configured to collect and manage the electrical energy.

In accordance with a third aspect of the present disclosure, an embodiment provides a communication device including the communication apparatus of the first or second aspect.

### BRIEF DESCRIPTION OF DRAWINGS

FIG. 1 is a schematic diagram of wired power supply;
FIG. 2 is a schematic diagram of wireless charging;
FIG. 3 is a schematic diagram of battery power supply;
FIG. 4 is a schematic diagram of a communication apparatus according to an embodiment of the present disclosure;
FIG. 5 is a schematic diagram of a charging circuit according to an embodiment of the present disclosure;
FIG. 6 is a schematic diagram of a charging circuit according to an embodiment of the present disclosure;
FIG. 7 is a schematic diagram of a communication apparatus according to an embodiment of the present disclosure;
FIG. 8 is a schematic diagram of a communication apparatus according to an embodiment of the present disclosure;
FIG. 9 is a schematic diagram of a communication apparatus according to an embodiment of the present disclosure;
FIG. 10 is a schematic diagram of a communication apparatus according to an embodiment of the present disclosure;
FIG. 11 is a schematic diagram of a communication apparatus according to an embodiment of the present disclosure;
FIG. 12 is a schematic diagram of the operation of a communication apparatus according to an embodiment of the present disclosure;
FIG. 13 is a schematic diagram illustrating the operation of a communication apparatus in different frequency bands in some embodiments of the present disclosure;
FIG. 14 illustrates possible charging circuits in some embodiments of the present disclosure;
FIG. 15 illustrates possible phase adjustment circuits in some embodiments of the present disclosure;
FIG. 16 illustrates possible antennas in some embodiments of the present disclosure;
FIG. 17 is a schematic diagram of a communication apparatus according to an embodiment of the present disclosure; and
FIG. 18 is a schematic diagram of an application of a communication apparatus according to an embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the particular embodiments described herein are only intended to explain the present disclosure, and are not intended to limit the present disclosure.

It is to be noted that although a functional module division is shown in a schematic diagram of an apparatus and a logical order is shown in a flowchart, the apparatus may have different module division, or the steps shown or described may be executed in a different order from that in the flowchart. The terms such as "first" and "second" in the description, claims and above-mentioned drawings are intended to distinguish between similar objects and are not necessarily to describe a specific order or sequence.

In the description of embodiments of the present disclosure, unless otherwise explicitly defined, the terms such as "configure", "install", and "connect" should be construed in a broad sense, and those of ordinary skills in the art can determine the specific meanings of the above terms in the present disclosure in a rational way in conjunction with the specific contents of embodiments of the technical schemes. In the embodiments of the present disclosure, the term such as "further," "exemplary," or "optionally" is used to represent as an example, an illustration, or an explanation and should not be construed as being more preferred or advantageous than another embodiment or design. The use of the term such as "further," "exemplary," or "optionally," is intended to present a related concept in a specific manner.

The embodiments of the present disclosure may be applied to various communication systems, such as: a Global System for Mobile communication (GSM), a Code Division Multiple Access (CDMA) system, a Wideband Code Division Multiple Access (WCDMA) system, a General Packet Radio Service (GPRS) system, a Long Term Evolution (LTE) system, an Advanced long term evolution (LIE-A) system, a Universal Mobile Telecommunication System (UMTS), 5G, Beyond Fifth Generation (B5G), 6th Generation (6G), etc., which are not limited in the embodiments of the present disclosure.

The embodiments of the present disclosure can be applied to user equipment such as mobile phones and tablets, as well as vehicle network communication apparatus such as smart cars and road-side units (RSUs), Internet of Things (IoT) communication apparatus such as intelligent robots, robotic arms, and wireless sensors, and also can be applied to reconfigurable intelligence surfaces (RISs), wireless relays, and other wireless mobile terminals, etc. The embodiments of the present disclosure are not limited to these applications.

The operation of a communication apparatus typically requires electrical energy, and there are many ways to provide electrical energy to a communication apparatus. In order to explain this technical scheme in detail, different application scenarios are taken as examples to further explain the power supply and charging for communication devices.

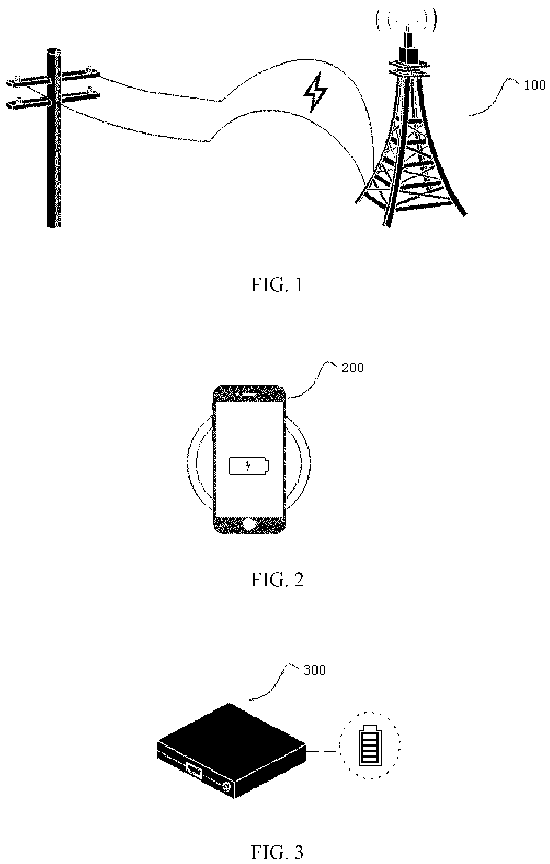

FIG. 1 is a schematic diagram of wired power supply. As shown in FIG. 1, a communication device such as a base station 100 is supplied with power through power transmission lines in order to operate normally. With the expansion of network demand, more and more communication devices are put into use. As the number of communication devices increases, the deployment and setup of power transmission lines for wired power supply or charging will become increasingly difficult. At the same time, application scenarios such as smart homes and industrial IoT involve a large number of communication devices, but the available space is usually limited. In such new application scenarios, the use of wired power supply and charging methods may not be fully suitable, and could also restrict the flexibility of device mobility.

FIG. 2 is a schematic diagram of wireless charging. As shown in FIG. 2, a communication device such as a user equipment 200 is wirelessly charged in order to operate normally. However, the related technologies use magnetic resonance or inductive charging methods. Magnetic resonance charging utilizes time-varying magnetic fields to induce currents in a receiving coil for charging, while inductive charging relies on the near-field inductive coupling to achieve energy transfer through resonance at a receiving end. It can be seen that the above wireless charging method is suitable for short-distance charging (generally from centimeters to meters), and the application scenarios are limited, making it difficult to meet the needs of communication devices such as in wireless communication networks that are relatively far apart (tens of meters to several kilometers).

In some other application scenarios, such as the IoT, the terminal devices directly convert the received electromagnetic signals into energy for signal transmission. The power supply and charging adopt backscattering technology. Although the wireless charging distance is longer than that of magnetic resonance or inductive charging, it is still limited. Moreover, this technology has low received power and is only suitable for intermittent, ultra-low-rate wireless communications, with limited application scenarios.

FIG. 3 is a schematic diagram of battery power supply. As shown in FIG. 3, a communication device such as an IoT device 300 is powered by a built-in battery for normal operation. However, relying on built-in batteries for power supply, the normal operating time is heavily dependent on battery life, which has constrained the development of the IoT.

Embodiments of the present disclosure provide a communication apparatus and device. By providing a phase adjustment circuit, a charging circuit, and antennas to convert electromagnetic signals into electrical energy to power the communication apparatus, wireless power supply and charging for communication devices over long distances are achieved, reducing power supply lines, improving the flexibility of device use and installation deployment, and reducing installation and maintenance costs. Some other embodiments of the present disclosure provide a base station. By incorporating a communication apparatus capable of long-distance wireless charging, the complexity of site selection and power supply line planning for the base station is reduced, and the maintenance and management costs of the completed base station are also significantly lowered.

The embodiments of the present disclosure will be further explained below with reference to the accompanying drawings.

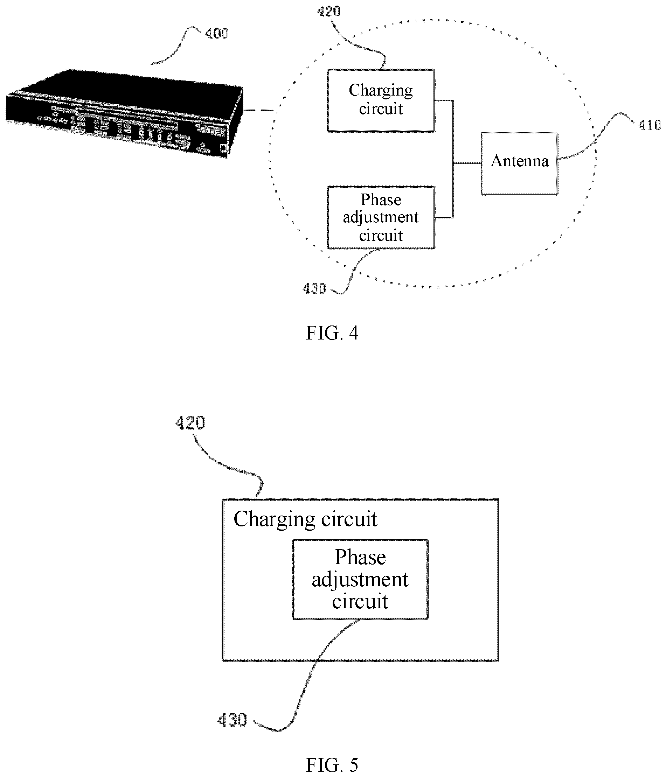

FIG. 4 is a schematic diagram of a communication apparatus according to an embodiment of the present disclosure. As shown in FIG. 4, the communication apparatus 400 includes at least antennas 410, a charging circuit 420, and a phase adjustment circuit 430.

The antennas 410 are configured to receive electromagnetic signals.

In an implementation, the antennas 410 receive electromagnetic signals from the external environment. The charging circuit 420 is configured to convert electromagnetic signals into electrical energy.

In an implementation, the electrical energy is used to power the communication apparatus to enable the communication apparatus to operate normally.

In another implementation, the electrical energy is stored, and when it is to be used, the electrical energy is released by an energy storage device to supply power to the communication apparatus. The phase adjustment circuit 430 is configured to adjust the phase of the electromagnetic signals.

In an implementation, the phase adjustment circuit 430 changes the phase of the received electromagnetic signals.

In another implementation, the phase adjustment circuit 430 changes the propagation direction of the incident electromagnetic signals, and can accurately propagate the electromagnetic signals to a predetermined receiving end through phase regulation. The antennas 410 are connected to the charging circuit 420, and electromagnetic signals are transmitted to the charging circuit 420 via the antennas 410.

In an implementation, electromagnetic signals are transmitted to the charging circuit 420 via the antennas 410. The charging circuit 420 converts the electromagnetic signals into electrical energy. The antennas 410 are connected to the phase adjustment circuit 430, and the electromagnetic signals are transmitted to the phase adjustment circuit 430 via the antennas 410.

In an implementation, electromagnetic signals are transmitted to the phase adjustment circuit 430 via the antennas 410. The phase adjustment circuit 430 adjusts the phase of the electromagnetic signals.

The communication apparatus of this embodiment is provided with the charging circuit to convert the received electromagnetic signals into electrical energy to provide energy for the apparatus. It can realize long-distance wireless charging and power supply, and has a wide range of application scenarios.

In an implementation, the charging circuit 420 may include circuit components such as a capacitor, an inductor, a diode, and a field effect transistor. In the present disclosure, the specific circuit configuration of the charging circuit 420 is not limited, and it is only necessary to ensure that the electromagnetic signals can be converted into electrical energy.

In an implementation, the phase adjustment circuit 430 may include circuit components such as a phase shifter, a capacitor, and an inductor. In the present disclosure, the specific circuit configuration of the phase adjustment circuit 430 is not limited, and it is only necessary to ensure that the phase adjustment of the electromagnetic signals can be achieved.

In an implementation, the antennas 410 are capable of reflecting electromagnetic signals. Specifically, the antennas 410 receive electromagnetic signals, and part of the received electromagnetic signals are reflected to the external environment after phase adjustment.

In an implementation, the antennas 410 are capable of passing through electromagnetic signals. Specifically, the antennas 410 receive electromagnetic signals, and part of the received electromagnetic signals are passed through to the external environment after phase adjustment.

In an implementation, the antennas 410 are capable of reflecting and passing through electromagnetic signals. Specifically, the antennas 410 receive electromagnetic signals, and part of the received electromagnetic signals are reflected to the external environment after phase adjustment, and another part of the electromagnetic signals are transmitted to the external environment after phase adjustment.

In an implementation, the antennas 410 can receive electromagnetic signals and amplify the received electromagnetic signals before emitting the received electromagnetic signals to the external environment. Specifically, the antennas 410 receive the electromagnetic signals, and part of the received electromagnetic signals are re-emitted to the external environment after phase adjustment and amplification.

FIG. 5 is a schematic diagram of a charging circuit according to an embodiment of the present disclosure. As shown in FIG. 5, the charging circuit 420 may include the phase adjustment circuit 430. Specifically, the phase adjustment circuit 430 may be formed by some electronic components of the charging circuit 420, thereby reducing hardware costs.

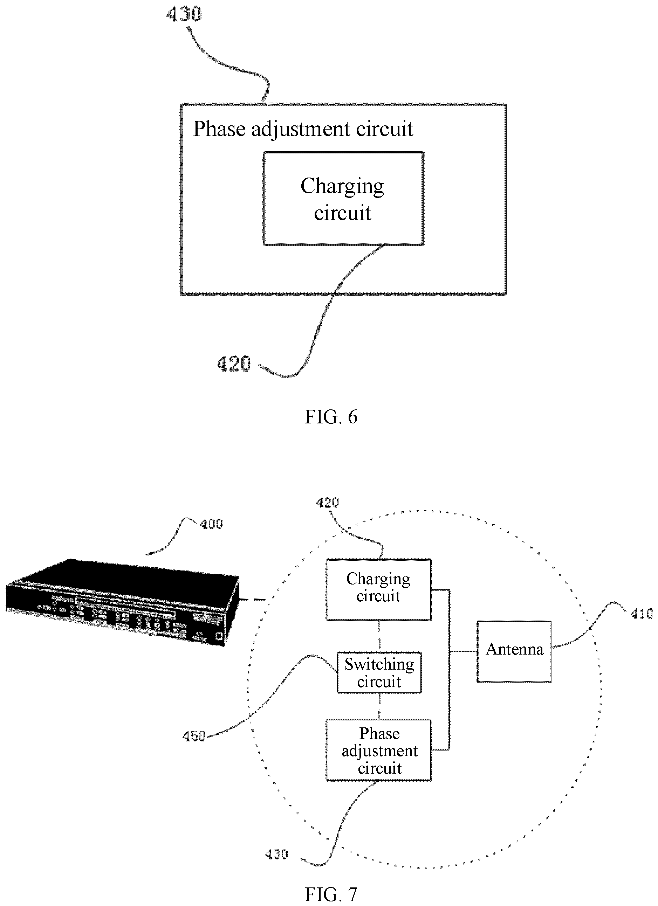

FIG. 6 is a schematic diagram of a charging circuit according to an embodiment of the present disclosure. As shown in FIG. 6, the phase adjustment circuit 430 may include the charging circuit 420. Specifically, the charging circuit 420 may be formed by some electronic components of the phase adjustment circuit 430, thereby reducing hardware costs.

In another implementation, the charging circuit 420 and the phase adjustment circuit 430 include the same electronic components. Specifically, the charging circuit 420 and the phase adjustment circuit 430 have common electronic components.

FIG. 7 is a schematic diagram of a communication apparatus according to an embodiment of the present disclosure. As shown in FIG. 7, the communication apparatus 400 further includes a switching circuit 450. Through the use of a changeover switch 450, the electronic components can be shared between the charging circuit 420 and the phase adjustment circuit 430. The communication apparatus according to this embodiment includes a changeover switch, and the electronic components can be shared by using the changeover switch, thereby reducing the costs of the communication apparatus. The switching circuit can also control the connection between the charging circuit, the phase adjustment circuit and the antennas. The switching circuit can connect the charging circuit to the antennas while disconnecting the phase adjustment circuit from the antennas, or connect the phase adjustment circuit to the antennas while disconnecting the charging circuit from the antennas, or connect/disconnect both the phase adjustment circuit and the charging circuit to/from the antennas.

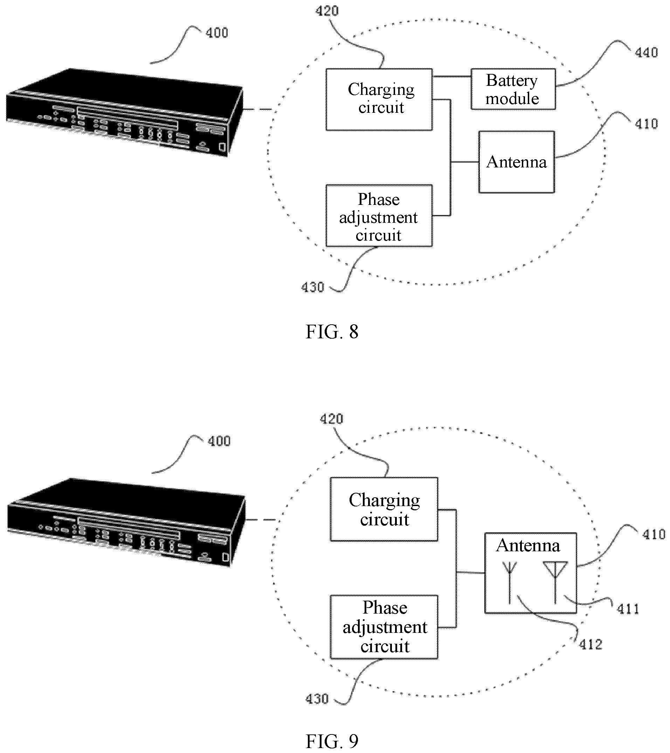

FIG. 8 is a schematic diagram of a communication apparatus according to an embodiment of the present disclosure. As shown in FIG. 8, the communication apparatus 400 further includes a battery module 440. The battery module 440 is configured to store electrical energy. When the antennas 410 receive electromagnetic signals, the charging circuit 420 converts at least a portion of the electromagnetic signals into electrical energy. The electrical energy may be directly supplied to the communication apparatus 400 for normal operation of the communication apparatus 400, or may be stored in the battery module 440. When the communication apparatus 400 requires electrical energy, such as when the power supply to the communication apparatus 400 is insufficient, the battery module 440 can provide power to the communication apparatus 400 to ensure the normal operation of the communication apparatus 400.

FIG. 9 is a schematic diagram of a communication apparatus according to an embodiment of the present disclosure. As shown in FIG. 9, the antennas 410 of the communication apparatus 400 include an energy antenna 411 and an information antenna 412. The energy antenna 411 can receive electromagnetic signals, and the electromagnetic signals received by the energy antenna 411 are converted into electrical energy through the charging circuit 420. The information antenna 412 can receive electromagnetic information, and by processing the electromagnetic information received by the information antenna 412, communication information carried by the electromagnetic signals can be obtained.

In an implementation, the communication apparatus 400 includes an antenna array consisting of a plurality of energy antennas 411. The electromagnetic information received by some of the energy antennas 411 also carries communication information, and the necessary communication information can be obtained by processing the electromagnetic information received by some of the energy antennas 411. That is, some of the energy antennas 411 may be used as information antennas 412 as well.

In an implementation, the communication apparatus 400 includes an antenna array consisting of a plurality of information antennas 412. The electromagnetic information received by the information antennas 412 can also be converted into electrical energy. The electromagnetic information received by the information antennas 412 can also be converted into electrical energy after being processed by the charging circuit 420. That is, some of the information antennas 412 may be used as energy antennas 411 as well.

In another implementation, the energy antennas 411 and the information antennas 412 include the same antenna elements. Specifically, the energy antennas 411 and the information antennas 412 have common antennas.

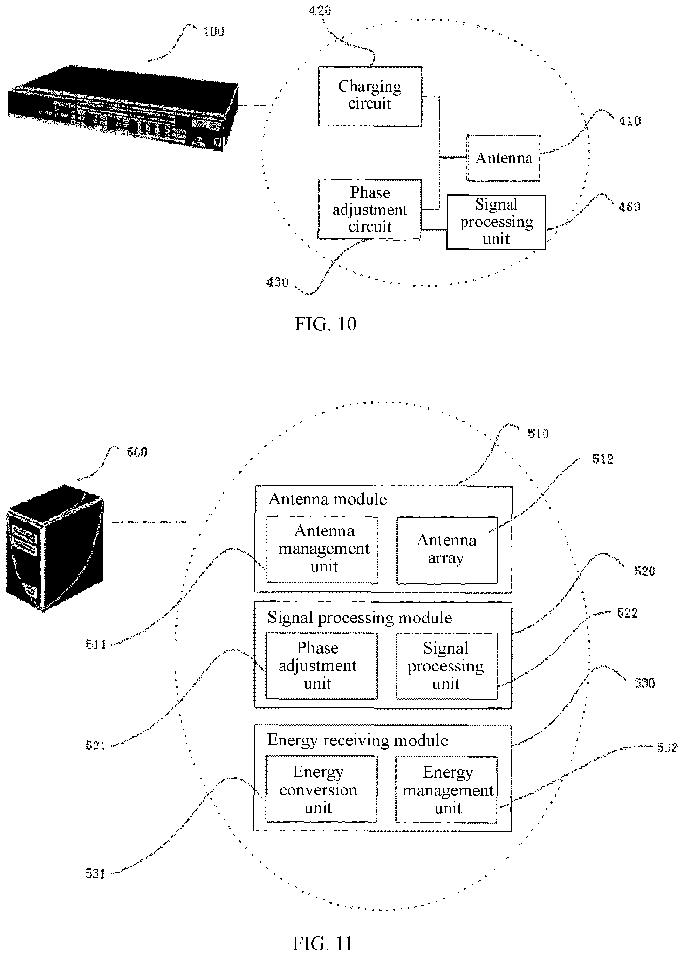

FIG. 10 is a schematic diagram of a communication apparatus according to an embodiment of the present disclosure. As shown in FIG. 10, the communication apparatus 400 further includes a signal processing unit 460. The signal processing unit 460 is configured to process the electromagnetic signals to obtain information carried by the electromagnetic signals. When the antennas 410 receive electromagnetic signals, the signal processing unit 460 performs processing, such as filtering, amplifying, de-noising, demodulating, and decoding, on at least part of the electromagnetic signals to obtain information carried in the signals.

The communication apparatus 400 of the present disclosure has a plurality of operation modes.

In an implementation, the communication apparatus has a first operation mode, where the first operation mode is to perform signal processing on the electromagnetic signals to obtain information carried by the electromagnetic signals. In an implementation, the communication apparatus has a second operation mode, where the second operation mode is to convert the electromagnetic signals into electrical energy.

In another implementation, the communication apparatus has a third operation mode, where the third operation mode is to perform signal processing on the electromagnetic signals to obtain information carried by the electromagnetic signals, and also convert the electromagnetic signals into electrical energy.

FIG. 11 is a schematic diagram of a communication apparatus according to an embodiment of the present disclosure. As shown in FIG. 11, the communication apparatus 500 includes an antenna module 510, a signal processing module 520, and an energy receiving module 530. The antenna module includes an antenna management unit and an antenna array, where the antenna array is configured to receive electromagnetic signals; and the antenna management unit is configured to control operation modes of the antenna array or manage allocation of antenna array resources. The antenna array includes information antennas and energy antennas. The signal processing module includes a phase adjustment unit and a signal processing unit, where the phase adjustment unit includes a phase adjustment circuit configured to adjust phases of electromagnetic signals; and the signal processing unit is configured to process electromagnetic signals to obtain information carried by the electromagnetic signals. The energy receiving module includes an energy conversion unit and an energy management unit, where the energy conversion unit includes an energy charging circuit configured to convert electromagnetic signals into electrical energy; and the energy management unit is configured to collect and manage the electrical energy.

In an implementation, the communication apparatus has a wireless charging mode and a wireless communication mode. In the wireless charging mode, the communication apparatus can receive radiated electromagnetic signals (hereinafter also referred to as energy signals for the convenience of distinguishing) from the external environment, and convert the received signals into electrical energy, which is then used for internal power supply. In the wireless communication mode, the communication apparatus receives radiated electromagnetic signals from the external environment and processes the received signals to obtain information carried by the signals. The processing of the electromagnetic signals may include filtering, amplification, de-noising, demodulation, decoding, etc. For the convenience of description, the electromagnetic signals received in this mode are called information signals. The electromagnetic signals received in the wireless charging mode and the electromagnetic signals received in the wireless communication mode may be the same type of signals or different types of signals, for example, may be signals of the same frequency or different frequencies, or may be signals from the same transmission source or different transmission sources.

In an implementation, the communication apparatus may also be set to work in different modes based on time. For example, the communication apparatus may work in the wireless charging mode in one time period and work in the wireless communication mode in another time period.

In another implementation, the communication apparatus can also be in two operation modes at the same time, that is, a part of the received electromagnetic signals is processed to obtain the information carried by the signals, and the other part of the received electromagnetic signals is converted into internal electrical energy.

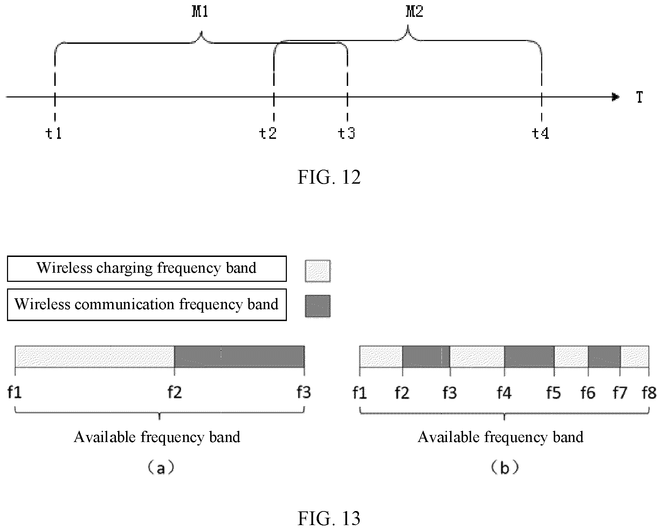

In order to explain the operation modes of the communication apparatus according to an embodiment of the present disclosure in more detail, the operation modes of the communication apparatus will be described below with reference to FIG. 12.

FIG. 12 is a schematic diagram of the operation of a communication apparatus according to an embodiment of the present disclosure. As shown in FIG. 12, the communication apparatus operates in the first operation mode M1 in the time period t1 to t3, and operates in the second operation mode M2 in the time period t2 to t4, and the two time periods have an overlapping time interval, that is, t2 to t3, in which the communication apparatus operates in the two modes at the same time, and can communicate and charge at the same time. The first operation mode M1 may be the wireless charging mode or the wireless communication mode, and the second operation mode M2 may be the wireless communication mode or the wireless charging mode.

When the communication device activates the two operation modes M1 and M2 at the same time, in order to avoid interference between the information signals and the energy signals, different working frequency bands may be used, that is, wireless communication uses a sub-band in the available band, and wireless charging uses another sub-band, and the two sub-bands each may be a continuous frequency band or segmented frequency bands.

FIG. 13 is a schematic diagram illustrating the operation of a communication apparatus in different frequency bands in some embodiments of the present disclosure. As shown in FIG. 13 (a), between the available frequency band f1-f3, the sub-band f1-f2 is used for wireless charging, while the sub-band f2-f3 is used for wireless communication. FIG. 13 (b) shows that the available frequency band is divided into multiple sub-bands, and these sub-bands are used for wireless charging and wireless communication, respectively. **In** the future communication systems, there may be a plurality of available frequency bands between communication apparatuses, such as sub-6G, millimeter wave, terahertz frequency bands, and the like, and in this case, the frequency resource division as shown in FIG. 13 can still be used in the available frequency bands for wireless charging and wireless communication.

**In** an implementation, the communication apparatus uses the same frequency to perform wireless communication and wireless charging, and in order to avoid interference between the information signals and the energy signals, the wireless communication and wireless charging may be performed at different time periods, respectively. For example, time period 1 is used for wireless communication and time period 2 is used for wireless charging, and time period 1 and time period 2 are not overlapped with each other. It should be noted that when wireless charging and wireless communication are performed during different time periods, the communication apparatus may select all the antennas available for information transmission and reception for communication in the wireless communication mode to improve the signal-to-noise ratio of the transmitted and received signals. Similarly, in the wireless charging mode, the communication apparatus may select all the antennas available for energy reception for energy signal reception to improve charging efficiency.

In an implementation, the communication apparatus uses the same frequency for wireless communication and wireless charging. In order to avoid interference between the information signals and the energy signals, different antennas may be used for information signal reception and energy signal reception, respectively. A typical scenario is that information signals and energy signals come from different directions. Using different receiving arrays to receive information signals and energy signals separately can reduce interference.

In an implementation, the two operation modes of the communication apparatus share the same antennas, the wireless communication mode and the wireless charging mode may be performed during different time periods to avoid signal interference. For example, time period 1 is used for wireless communication and time period 2 is used for wireless charging, and time period 1 and time period 2 are not overlapped with each other.

In an implementation, if the two operation modes of the communication apparatus require the same antennas, the wireless communication mode and the wireless charging mode may use different frequency bands.

In an implementation, the radiated information signal beam from the external environment is wide and can be received by the information receiving antenna and the energy receiving antenna of the communication apparatus at the same time. The information signal received by the information receiving antenna is used for signal processing, and the information signal received by the energy receiving antenna is converted into electrical energy by the charging circuit.

In another implementation, if the first operation mode M1 and the second operation mode M2 are not activated at the same time, the operation mode switching of the communication apparatus may adopt joint state control, that is, joint control of activation of the wireless charging mode and deactivation of the wireless communication mode, and joint control of deactivation of the wireless charging mode and activation of the wireless communication mode, so as to reduce the control circuits and the control signaling.

When the communication apparatus operates in the wireless charging mode, the electromagnetic signals received by the apparatus is converted into electrical energy by the charging circuit. The charging circuit may include circuit components such as capacitors (including fixed and variable capacitors), inductors, diodes, field effect transistors, etc.

In an implementation, the communication apparatus may also be set to work in different modes based on power supply conditions. For example, when the communication apparatus has been charged for a long time and the converted electrical energy can provide sufficient power supply for the communication apparatus, the wireless charging mode may be deactivated to extend the service life of the charging module. When the communication apparatus has no communication demand or the power supply is insufficient, the wireless communication mode may also be deactivated to reduce its energy consumption. When the communication apparatus needs to maintain continuous communication but faces shortages of internal power supply, the communication apparatus may operate in the wireless charging mode and the wireless communication mode at the same time. The communication apparatus can freely switch between the two different modes according to actual needs.

The communication apparatus may have a plurality of operation modes in the wireless communication mode, such as a communication transceiver mode and an electromagnetic regulation mode.

In the communication transceiver mode, on the one hand, the communication apparatus can receive electromagnetic signals through the information receiving antenna, and process the received signals to obtain information carried in the signals, on the other hand, the communication apparatus can actively emit electromagnetic signals carrying information to the external environment through the information receiving antenna. The communication apparatus may be used for receiving and transmitting information at the same time, or may be used for receiving information in one time period and for transmitting information in another time period. This operation mode is mainly applicable to communication apparatus providing wireless access services (such as new base stations), personal mobile terminals (such as smart phones) and IoT terminals (such as various sensors) that require wireless access services.

In an embodiment, the communication apparatus may provide wireless access services to other communication apparatus. The communication apparatus broadcasts the wireless access service provided by itself through the information receiving antenna. Other communication apparatus, having received the broadcast information, can transmit a wireless access request to the communication apparatus. The communication apparatus receives the wireless access request through the information receiving antenna, and transmits information to the other communication apparatus through the information receiving antenna to confirm whether a connection is to be established or not, and provides the wireless communication service to the other communication apparatus after confirming the connection. In this embodiment, the communication apparatus has the function of a communication base station.

In another embodiment, the communication apparatus requests a wireless access service from another communication apparatus. The communication apparatus receives a broadcast signal from other communication apparatus through an information receiving antenna, determines that the other communication apparatus can provide a wireless access service from the received broadcast signal, the communication apparatus transmits a signal to the other communication apparatus through its information receiving antenna to request access to a wireless network, and then listens for a response signal from the other communication apparatus through the information receiving antenna. After the communication apparatus confirms the connection, the communication apparatus can exchange information with the other communication device through the communication apparatus. In this embodiment, the communication apparatus has the functions of a mobile communication terminal and an IoT terminal.

When the communication apparatus works in the electromagnetic regulation mode, the electromagnetic signal radiated from the external environment to the communication apparatus is received by the information receiving antenna, and its phase is changed through the phase adjustment circuit, and the communication apparatus finally implements one of the following operations on the electromagnetic signal after completing the phase regulation: 1) reflecting the electromagnetic signal to the external environment from the side where the signal is received; 2) passing through the electromagnetic signal from the other side of the communication apparatus to the external environment; or 3) reflecting and passing through the electromagnetic signal at the same time, so that the received electromagnetic signal propagates in two different directions. In this operation mode, the function of the communication apparatus is to change the propagation direction of the incident electromagnetic signal, and through appropriate phase regulation, the electromagnetic signal carrying information can be accurately propagated to the predetermined information receiving end or energy receiving end. Therefore, in this operation mode, the communication apparatus can fulfill the role of information and energy relay.

In an embodiment, the communication apparatus receives electromagnetic signals radiated from the external environment through its N receiving antennas. After being received by the information receiving antennas of the communication apparatus, the electromagnetic signals are adjusted in phase by the phase adjustment circuit and then reflected. The phase adjustment circuit connected to the N antennas can implement the same or different phase regulation on the received signals, so that the received electromagnetic signals can change the propagation direction or the distribution width of the signals on the spatial propagation path after being reflected by the communication apparatus. For example, the reflected signals are concentrated to propagate in one or more specified directions, and for example, the reflected signals have a wider or narrower distribution range than the incident signals. In this operation mode, the communication apparatus has the functions of signal relay and RIS.

In another embodiment, the communication apparatus receives electromagnetic signals radiated from the external environment through its N receiving antennas. After passing through the information receiving antennas of the communication apparatus, the electromagnetic signals are adjusted in phase by the phase adjustment circuit and then passed through. Being passed through means that electromagnetic signals are incident on one side of the communication apparatus and then exit from the other side of the communication apparatus. The phase adjustment circuit connected to the N antennas can implement the same or different phase regulation on the received signals, so that the received electromagnetic signals can change the propagation direction or the distribution width of the signals on the spatial propagation path after being passed through by the communication apparatus. For example, the passed through signals are concentrated to propagate in one or more specified directions, and for example, the passed through signals have a wider or narrower distribution range than the incident signals. In this operation mode, the communication apparatus has the functions of signal relay and RIS.

In another embodiment, the communication apparatus receives electromagnetic signals radiated from the external environment through its N receiving antennas. After passing through the information receiving antennas of the communication apparatus, the electromagnetic signals are adjusted in phase by the phase adjustment circuit and then are reflected and passed through. The phase adjustment circuit connected to the N antennas can implement the same or different phase regulation on the received signals, so that the received electromagnetic signals can change the propagation direction or the distribution width of the signals on the spatial propagation path after being reflected and passed through by the communication apparatus. For example, the reflected and passed through signals are concentrated to propagate in one or more specified directions, and for example, the reflected and passed through signals have a wider or narrower distribution range than the incident signals. In this operation mode, the communication apparatus has the functions of signal relay and RIS.

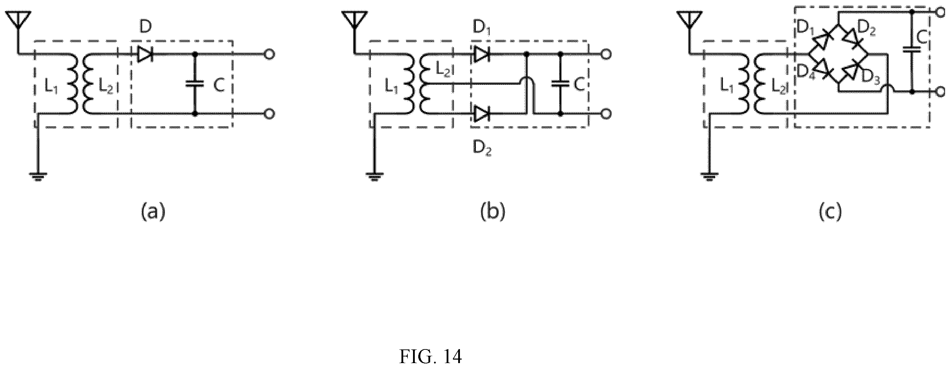

FIG. 14 illustrates possible charging circuits in some embodiments of the present disclosure. The charging circuit shown in FIGS. 14(a)-(c) includes at least a resonant circuit (within the dashed block) and a shaping circuit (within the dashed block), and the resonant circuit is composed of an inductor L1 and an inductor L2. As shown in FIG. 14(a), the shaping circuit consists of a diode D and a capacitor C; as shown in FIG. 14(b), the shaping circuit consists of a diode D1, a diode D2 and a capacitor C; and as shown in FIG. 14(c), the shaping circuit consists of diodes D1, D2, D3, D4 and a capacitor C. Herein, the resonant circuit is configured to convert the received electromagnetic signals into alternating current in the charging circuit, while the shaping circuit is responsible for converting the alternating current into DC output for powering the communication apparatus or storing the energy in a battery module.

In another implementation, the charging circuit may also be varied and improved on the basis of these three circuits, and additional processing circuitry (such as voltage stabilizing circuitry) may also be added to achieve more efficient and smoother electrical energy conversion. The present disclosure does not impose any restrictions on the charging circuit, and any circuit that can realize charging can be applied to the charging circuit of the present disclosure.

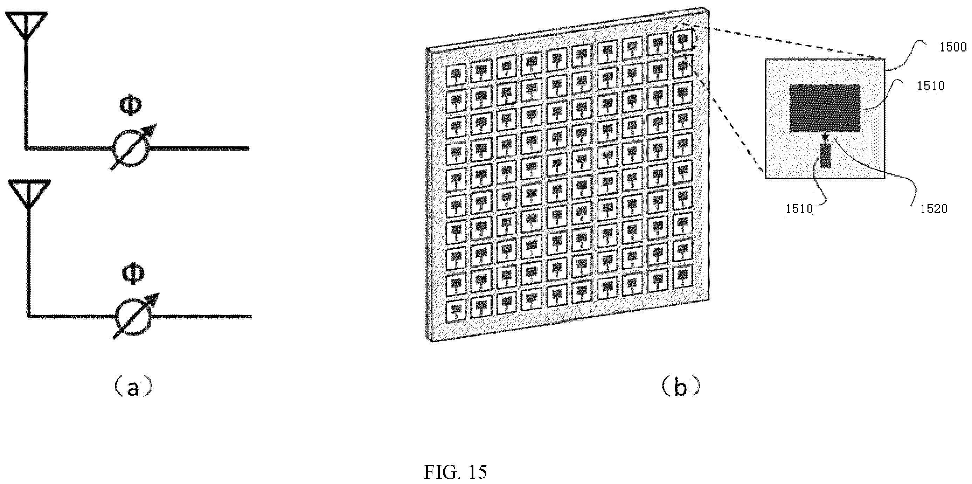

FIG. 15 illustrates possible phase adjustment circuits in some embodiments of the present disclosure. The phase adjustment circuit may be composed of a circuit including a phase shifter, or may be composed of a microstrip circuit or a resonant structure integrated on the receiving antenna. As shown in FIG. 15(a), the phase adjustment circuit realizes the signal phase adjustment function by a phase shifter. FIG. 15(b) shows a schematic diagram of a phase adjustment circuit integrated on an antenna element. The two metal patches 1510 of each patch antenna element 1500 in FIG. 15 (b) are connected by a varactor 1520, and the phase of the received signal is changed by the varactor.

The phase adjustment circuit may also be improved and optimized on the basis of the circuit shown in FIG. 15, for example, the varactor is changed to a PIN diode, liquid crystal cell, MEMS cell, etc., or a phase correction circuit may be added to make the phase adjustment more accurate, or for example, an amplifier circuit may be added to increase the signal strength, etc. The present disclosure does not impose any restrictions on the phase adjustment circuit, and any circuit capable of phase adjustment can be applied to the phase adjustment circuit of the present disclosure.

The charging circuit and the phase adjustment circuit may have different configurations. In an implementation, the wireless charging circuit and the phase adjustment circuit may share electronic components. Sharing electronic components can reduce the costs of the communication device. In order to realize the sharing of electronic components, a changeover switch can be added between the two types of circuits. In an implementation, the phase adjustment circuit is a subset of the wireless charging circuit. Integrating the phase adjustment circuit into the wireless charging circuit can effectively reduce the area of the circuit board, which is beneficial to the miniaturization of the communication device. In another implementation, the wireless charging circuit is a subset of the phase adjustment circuit. Integrating the wireless charging circuit into the phase adjustment circuit can also effectively reduce the area of the circuit board, which is beneficial to the miniaturization of the communication device.

The antennas may have different configurations. In an implementation, the energy receiving antenna is configured to connect with the wireless charging circuit and provide the received energy signals to the charging circuit. After the electromagnetic signals are transmitted into the wireless charging circuit, the electromagnetic signals are converted into electrical energy for use in the communication apparatus. The energy receiving antenna may be composed **of a single** antenna or a multi-antenna array. When the communication apparatus operates in the wireless charging mode, at least the energy receiving antenna and the wireless charging circuit need to be connected. The energy receiving antenna may have a signal emitting capability and may emit electromagnetic signals to the external environment. In another implementation, the information receiving antenna is configured to receive information signals, and may be composed of a single antenna or a multi-antenna array. When the communication apparatus operates in the wireless communication mode, at least the information receiving antenna and the phase adjustment circuit need to be connected. When the phase adjustment circuit is connected, the phase regulation of the signals is realized. When the phase adjustment circuit is integrated on the antenna element in a manner as shown in FIG. 15 (b), the information receiving antenna may reflect or pass through the received information signal, or reflect and pass through the received information signal simultaneously. At the same time, the information receiving antenna may have a signal emitting capability and may emit electromagnetic signals to the external environment.

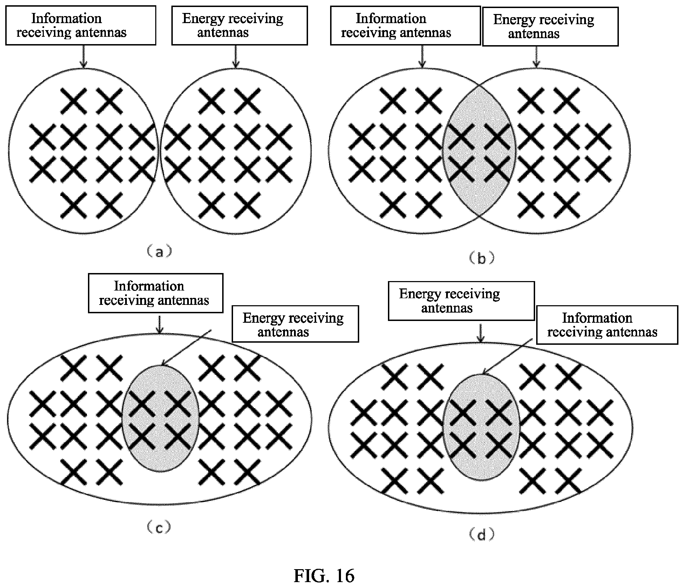

The information antenna and the energy antenna may have different configurations. FIG. 16 illustrates possible antenna arrangements in some embodiments of the present disclosure.

As shown in FIG. 16(a), the information receiving antennas and the energy receiving antennas are not overlapped with each other, and the communication apparatus uses different antennas for information reception and energy reception. It can be understood that the communication apparatus has a total of N antennas (N ≥ 2), where N1 antennas are only used for information signal reception, N2 antennas are only used for energy signal reception, and N1 > 0, N2 > 0, N1+N2 = N.

As shown in FIG. 16 (b), there is an overlap between the energy receiving antennas and the information receiving antennas, and a part of the antennas of the communication apparatus are only used for information signal reception, a part of the antennas are only used for energy signal reception, and another part of the antennas can be used for both information signal reception and energy signal reception. It can be understood that the communication apparatus includes N antennas, N ≥ 2, where N1 antennas are used only for information signal reception, N2 antennas are used only for energy signal reception, N3 antennas can be used for both information signal reception and energy signal reception, and N1 ≥ 0, N2 ≥ 0, N3 ≥ 0, N1+N2+N3 = N.

As shown in FIG. 16(c), the energy receiving antennas are a subset of the information receiving antennas, and all of the antennas of the communication apparatus can be used for information signal reception and some of them can be used for energy signal reception. It can be understood that the communication apparatus includes N antennas, where N ≥ 1, all of the N antennas are used for information signal reception, and N1 antennas can also be used for energy signal reception, and N1 ≤ N.

As shown in FIG. 16(d), the information receiving antennas are a subset of the energy receiving antennas, and all of the antennas of the communication apparatus can be used for **energy** signal reception and some of them can be used for information signal reception. It can be understood that the communication apparatus includes N antennas, where N ≥ 1, all of the N antennas are used for energy signal reception, and N1 antennas can also be used for information signal reception, and N1 ≤ N.

FIG. 16 only shows the schematic diagrams of the set relationship of the two types of antennas, and does not represent the actual spatial positions of the two types of antennas. The present disclosure does not limit the spatial position of the receiving antennas, and any rational antenna topology design can be used in the communication apparatus of the present disclosure.

The communication apparatus selects an appropriate number of antennas from all antennas for wireless charging and wireless communication, respectively, according to the actual application. When the communication apparatus needs to enhance the signal-to-noise ratio of the received or emitted signals, all the antennas available for information reception and emitting may be selected to transmit and receive information. When the communication apparatus needs to reduce the power consumption of reception or transmission, only a part of the antennas available for reception and transmission of information may be selected to transmit and receive information. When the communication apparatus needs to improve wireless charging efficiency, all antennas that can receive energy signals may be selected for wireless charging. When the communication apparatus requires simultaneous communication and wireless charging, the number of antennas for information transmission and reception and energy signal reception may be determined according to the signal-to-noise ratio requirement of the information signals and the current power demand.

In an implementation, the communication apparatus may include a rechargeable battery module for storing electrical energy converted during wireless charging, so that the communication apparatus can obtain more stable power supply.

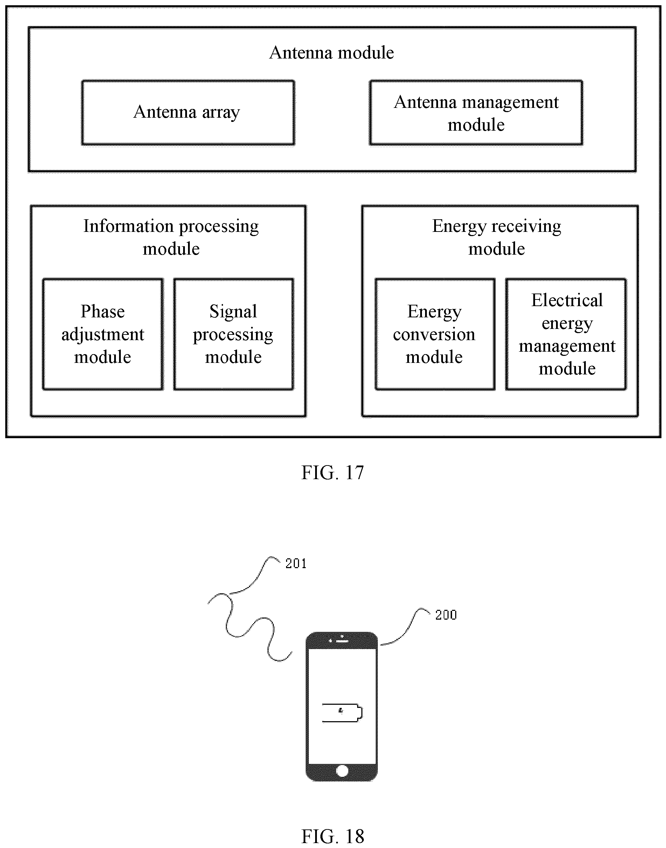

FIG. 17 is a schematic diagram of a communication apparatus according to an embodiment of the present disclosure. As shown in FIG. 17, the communication apparatus includes an antenna module, an information processing module, and an energy receiving module. Herein, the energy receiving module can convert electromagnetic signals radiated from the external environment into electrical energy and provide power to the entire base station through internal circuits; and the information processing unit may receive the electromagnetic signals radiated from the external environment and carrying information and perform information extraction, reflection, passing through or re-emitting of the received signals.

In an embodiment, the antenna module includes an antenna array and an antenna management module. The antenna array includes two types of antennas: the information receiving antenna and the energy receiving antenna, and is composed of at least N antennas, N ≥ 1, and may receive electromagnetic signals emitted from the external environment, where Nt antennas may also emit electromagnetic signals, Nt ≤ N. The antenna management module includes two functions. The first function is to control the operation mode switching of the antennas in the antenna array. The operation mode of the antennas includes signal emitting and **signal** reception. The second function is to manage the allocation of antenna resources, specifically to determine the number N1 of antennas used for information signal emitting and reception and the number N2 of antennas used for energy signal reception, where N1 ≤ Nt, and N2 ≤ N. According to the determined N1 and N2, the antenna management module connects the corresponding antennas to the information processing module and the energy conversion module, respectively, so as to switch the antennas between the two functions of information signal reception and energy signal reception. Accordingly, the information receiving antenna and the energy receiving antenna of the antenna array are interchangeable. Antennas for energy reception and signal emitting and reception may include half-wave dipole antennas, microstrip patch antennas, leaky wave antennas, lens antennas, metamaterial antennas, etc.

**In** an embodiment, the information processing module includes a phase adjustment module and a signal processing module, where the phase adjustment module includes a phase adjustment circuit, which can perform phase adjustment on the received electromagnetic signals; and the signal processing unit includes a signal processing circuitry and a signal processing software system, and may perform conventional processing such as filtering, amplification, noise reduction, encoding, decoding, modulation, demodulation, etc. of a signal to be emitted and a signal to be received. The information processing module may perform two types of operations on the electromagnetic signals incoming from the antenna array. One type of operation is phase adjustment performed by the phase adjustment sub-module. After the phase adjustment is completed, the signal is reflected or passed through by the communication apparatus, or simultaneously reflected and passed through to the specified propagation direction. Another type of operation is information reception performed by the signal processing sub-module. After the signal processing is completed, the information carried in the received signal may be restored.

**In** an embodiment, the energy receiving unit includes an energy conversion module and an electrical energy management module, where the energy conversion module includes a wireless charging circuit, which may convert the electromagnetic signals received by the antenna array into electrical energy; the electrical energy management module may collect and manage the electrical energy converted by the energy conversion module, and provide power for the whole communication apparatus through the internal circuit of the base station; and the electrical energy management module may further include a rechargeable battery module, and the energy management module may store the collected electrical energy in the battery module to provide a more stable power supply.

In an embodiment, the information processing module and the energy receiving module may share electronic components and part of the circuits to reduce costs and circuit board area. The communication apparatus according to this embodiment may be used to implement functions of a communication base station, a RIS, a mobile terminal, and an IoT terminal.

The communication apparatus according to the embodiments of the present disclosure can be applied to electronic devices such as a base station, a communication device, and a terminal device. FIG. 18 is a schematic diagram of an application of a communication apparatus according to an embodiment of the present disclosure. As shown in FIG. 18, the user equipment 200, such as a mobile phone, is provided with a communication apparatus according to an embodiment of the present disclosure, and the mobile phone can receive electromagnetic signals emitted from a distant location and convert the electromagnetic signals into electrical energy to charge an internal battery, so that the wireless charging distance can be improved.

It can be understood by those of ordinary skills in the art that all or some of the steps of the methods, the functional modules/units in the systems and the devices disclosed above can be implemented as software, firmware, hardware and appropriate combinations thereof.

**In** a hardware implementation, the division between functional modules/units mentioned in the above description does not necessarily correspond to the division of physical components. For example, a physical component may have multiple functions, or a function or step may be performed cooperatively by several physical components. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skills in the art, the term computer-readable storage medium includes volatile and nonvolatile, removable and non-removable media implemented in any method or technique for storing information, such as computer-readable instructions, data structures, program modules or other data. The computer-readable storage medium includes but is not limited to a random access memory (RAM), a read-only memory (ROM), an electrically erasable programmable read-only memory (EEPROM), a flash memory or other memory techniques, a compact disc read-only memory (CD-ROM), a digital versatile disk (DVD) or other optical disk storage, a magnetic cassette, a magnetic tape, magnetic disk storage or other magnetic storage devices, or any other medium that can be used to store desired information and can be accessed by a computer. Furthermore, it is well known to those of ordinary skills in the art that communication media typically contain computer-readable instructions, data structures, program modules or other data in a modulated data signal such as a carrier wave or other transmission mechanism, and may include any information transmission media.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, a thread of execution, a program, or a computer. As illustrated by using figures, both a computing device and an application that runs on a computing device may be components. One or more components may reside within a process or a thread of execution, and a component may be located on one computer or distributed between two or more computers. **In** addition, these components may be executed by various computer-readable media that store various data structures. For example, the components may communicate by using a local or remote process and based on a signal having one or more data packets (for example, data from two components interacting with another component in a local system, a distributed system, or across a network such as Internet interacting with another system by using the signal).

Some embodiments of the present disclosure have been described above with reference to the accompanying drawings and are not to limit the scope of the present disclosure. Any modifications, equivalent substitutions, and improvements made by those of ordinary skills in the art without departing from the scope and essence of the present disclosure shall fall within the scope of the present disclosure.

## Claims

1. A communication apparatus, comprising:
a phase adjustment circuit, configured to adjust phases of electromagnetic signals;
a charging circuit, configured to convert the electromagnetic signals into electrical energy; and
antennas, configured to receive the electromagnetic signals;
wherein the antennas are connected to the phase adjustment circuit, and the electromagnetic signals are transmitted to the phase adjustment circuit through the antennas; and
the antennas are connected to the charging circuit, and the electromagnetic signals are transmitted to the charging circuit through the antennas.

2. The apparatus of claim **1,** wherein
the charging circuit and the phase adjustment circuit share at least a portion of electronic components.

3. The apparatus of claim 1 or 2, further comprising:
a switching circuit that enables switching between the charging circuit and the phase adjustment circuit.

4. The apparatus of claim 1 or 2, further comprising:
a battery module configured to store the electrical energy.

5. The apparatus of claim 1 or 2, wherein
the antennas comprise energy antennas and information antennas;
the energy antennas are configured to receive electromagnetic signals, and the electromagnetic signals received by the energy antennas are converted into the electrical energy; and
the information antennas are configured to receive electromagnetic signals, and communication information is obtained by processing the electromagnetic signals received by the information antennas.

6. The apparatus of claim 1, wherein
the antennas comprise information antennas;
the information antennas comprise energy antennas, wherein at least a portion of the information antennas are switchable into the energy antennas; and
the energy antennas are configured to receive electromagnetic signals.

7. The apparatus of claim 1, wherein
the antennas comprise energy antennas;
the energy antennas comprise information antennas, wherein at least a portion of the energy antennas are switchable to the information antennas; and
the information antennas are configured to receive electromagnetic signals.

8. The apparatus of claim 6 or 7, wherein
the apparatus further comprises a signal processing unit;
the signal processing unit is configured to process the electromagnetic signals to obtain information carried by the electromagnetic signals; and
the electromagnetic signals received by the information antennas are processed by the signal processing unit to obtain the information carried by the electromagnetic signals.

9. The apparatus of claim 1 or 2, wherein
the communication apparatus has a first operation mode, a second operation mode, and a third operation mode;
in the first operation mode, the electromagnetic signals are processed to obtain information carried by the electromagnetic signals;
in the second operation mode, the electromagnetic signals are converted into the electrical energy; and
in the third operation mode, the electromagnetic signals are processed to obtain information carried by the electromagnetic signals, and converted into the electrical energy.

10. The apparatus of claim 6 or 7, wherein
the communication apparatus is configured to receive the electromagnetic signals through the energy antennas; and
the electromagnetic signals are converted into the electrical energy by an energy charging circuit.

11. The apparatus of claim 6 or 7, wherein
the communication apparatus is configured to receive the electromagnetic signals through the information antennas; and
the electromagnetic signals are adjusted in phase by the phase adjustment circuit.

12. The apparatus of claim 1 or 2, wherein
the antennas are further configured for at least one of:
reflecting the electromagnetic signals; or
passing through the electromagnetic signals; and
the reflecting or passing through the electromagnetic signals comprises at least one of:
adjusting phases of the received electromagnetic signals via the phase adjustment circuit and reflecting the electromagnetic signals;
adjusting phases of the received electromagnetic signals via the phase adjustment circuit and passing through the electromagnetic signals; or
adjusting phases of the received electromagnetic signals via the phase adjustment circuit and both reflecting and passing through the electromagnetic signals.

13. The apparatus of claim 1 or 2, wherein
the antennas are further configured to emit electromagnetic signals; and
the electromagnetic signals are emitted by: adjusting phases of the received electromagnetic signals via the phase adjustment circuit and radiating the adjusted electromagnetic signals outward from the antennas.

14. The apparatus of claim 5, wherein
the antennas are configured to receive electromagnetic signals of a first frequency band and a second frequency band;
the electromagnetic signals of the first frequency band are received through the information antennas and are used for wireless communication; and
the electromagnetic signals of the second frequency band are received through the energy antennas and are used for wireless charging.

15. The apparatus of claim 1 or 2, wherein
the communication apparatus is configured to perform at least one of:
receiving the electromagnetic signals during a first time period, the electromagnetic signal being used for wireless communication; or
receiving the electromagnetic signals during a second time period, the electromagnetic signal being used for wireless charging.

16. A communication apparatus, comprising: an antenna module, a signal processing module, and an energy receiving module, wherein:
the antenna module comprises an antenna management unit and an antenna array;
the antenna array is configured to receive electromagnetic signals;
the antenna management unit is configured to control operation modes of the antenna array and manage allocation of antenna array resources;
the signal processing module comprises a phase adjustment unit and a signal processing unit;
the phase adjustment unit comprises a phase adjustment circuit configured to adjust phases of the electromagnetic signals;
the signal processing unit is configured to process the electromagnetic signals to obtain information carried by the electromagnetic signals;
the energy receiving module comprises an energy conversion unit and an energy management unit;
the energy conversion unit comprises an energy charging circuit configured to convert the electromagnetic signals into electrical energy; and
the energy management unit is configured to collect or manage the electrical energy.

17. The communication apparatus of claim 16, wherein:
the charging circuit and the phase adjustment circuit share at least a portion of electronic components and circuitry.

18. The communication apparatus of claim 16, wherein:
the antenna array comprises information antennas and energy antennas;
the energy antennas are configured to receive electromagnetic signals; and
the information antennas are configured to receive electromagnetic information.

19. The communication apparatus of claim 16, wherein:
the energy management unit further comprises a battery configured to store the electrical energy.

20. A communication device, comprising the communication apparatus of any one of claims 1 to 19.
